Europäisches Patentamt

(19) European Patent Office

Office européen des brevets

(11) Numéro de publication : **0 134 726**
**B1**

(12) **FASCICULE DE BREVET EUROPÉEN**

(45) Date de publication du fascicule du brevet :
**20.01.88**

(21) Numéro de dépôt : **84401178.3**

(22) Date de dépôt : **07.06.84**

(51) Int. Cl.⁴ : **F 16 K 31/363, B 65 D 88/70**

(54) **Valve de décharge brutale commandée par un piston.**

(30) Priorité : **15.06.83 FR 8310111**

(43) Date de publication de la demande :
**20.03.85 Bulletin 85/12**

(45) Mention de la délivrance du brevet :
**20.01.88 Bulletin 88/03**

(84) Etats contractants désignés :
**AT BE CH DE GB IT LI NL SE**

(56) Documents cités :
**EP-A- 0 021 999**
**FR-A- 2 074 786**
**FR-A- 2 214 651**
**FR-A- 2 429 952**
**US-A- 3 942 684**
**US-A- 4 197 966**

(73) Titulaire : **STANDARD INDUSTRIE S.A.**
**37 rue de Lorraine**
**F-59100 Roubaix (FR)**

(72) Inventeur : **Simoens, Hervé**
**49 Avenue Emile Zolé**
**F-59000 Lille (FR)**

(74) Mandataire : **Ecrepont, Robert**
**Cabinet Ecrepont 12 Place Simon Vollant (Porte de Paris)**
**F-59800 Lille (FR)**

Jouve, 18, rue St-Denis, 75001 Paris, France

## Description

L'invention se rapporte à un piston de valve d'alimentation d'une capacité puis de décharge brutale de cette capacité.

Elle se rapporte également à la valve de décharge brutale pourvue de ce piston.

Elle trouve plus particulièrement mais non exclusivement application dans l'amélioration de l'écoulement d'un produit granuleux ou pulvérulent en sortie d'installations telles que silos ou trémies.

Elle assure alors cette amélioration de l'écoulement par élimination des paquets stagnants dans des angles morts et/ou par destructions, tant de la couche adhérant aux parois que du pont ou de la voûte formée par le produit devant l'orifice de sortie. Une telle valve de décharge brutale, quelquefois dénommée canon à air, comprend (US-A-3.942.682, FR-A-2.214.651, FR-A-2.429.952) d'une part, une chambre d'alimentation pourvue d'un orifice de remplissage et d'un orifice de communication avec la capacité et, d'autre part, un parcours de décharge vers l'installation à laquelle la valve de décharge brutale s'applique.

La chambre d'alimentation est constituée à l'arrière d'un cylindre dans lequel est logé un piston libre en translation subissant, dans une direction, une poussée due à l'action d'une pression et notamment à celle du gaz introduit dans la chambre d'alimentation en vue du remplissage de la capacité.

Pour contrôler la circulation du gaz dans le parcours de décharge, celui-ci est scindé en deux tronçons par un siège avec lequel coopère un organe d'obturation que porte ou réalise directement le piston et dont la mise en place est assurée par la susdite pression poussant le piston.

Dès que, dans la chambre d'alimentation, la pression correspondante est relâchée, la pression du gaz présent dans la capacité agit sur le piston dans une direction opposée à celle de la poussée précitée et fait revenir d'un coup sec le piston qui ouvre alors violemment la tubulure de décharge de la capacité jusqu'à réapparition de la pression d'alimentation pour un nouveau remplissage de la capacité.

Dans le but de relâcher ladite pression d'alimentation, l'orifice de remplissage est généralement relié à la source du gaz sous pression par l'intermédiaire d'un distributeur à plusieurs voies permettant notamment, et ce, à volonté, soit de fermer, soit de raccorder cet orifice aussi bien à la source de pression qu'à l'air libre.

Outre qu'elles sont complexes, donc très coûteuses, les valves de ce type (US-A-3942684) présentent des inconvénients dont un majeur qui résulte de la perte de charge subie par le gaz lorsque, pour la décharge, il doit, au droit du siège de l'obturateur, franchir un passage de section relativement faible. Le gaz met alors plus de temps pour s'écouler et cela réduit donc considérablement la soudaineté de la décharge.

Du fait que le piston doit encore être suffisamment long, et notamment de longueur supérieure à son diamètre, pour assurer son guidage dans le cylindre aussi parfaitement que demandé pour éviter tout coincement, même lorsque pour être allégé le piston est creusé du côté opposé à sa face réalisant le siège (FR-A-2.214.651), ce type de valve présente encore l'inconvénient d'avoir un piston qui est lourd et qui a donc une forte inertie. Ce type de valve a également l'inconvénient d'être encombrant. En outre, pour, entre la chambre d'alimentation et l'avant du piston, établir l'étanchéité nécessaire à la garantie du renvoi de l'obturateur sur son siège, le piston doit être ajusté à l'intérieur dudit cylindre et ce pratiquement sans jeu, ce qui exige un usinage précis et donc coûteux.

Plus récemment, afin de remédier au premier de ces inconvénients et donc d'éviter une perte de charge, est apparue une nouvelle valve de décharge brutale (FR-A-2.429.952) gardant un parcours de décharge de section pratiquement constante y compris au travers du siège.

Dans cette valve, le cylindre a une longueur au moins égale au double du diamètre du parcours de décharge dont l'un des tronçons est raccordé à l'avant du cylindre alors que l'autre tronçon est piqué radialement et vers l'avant du cylindre de manière que son orifice de raccordement au cylindre soit obturé par le piston lorsque celui-ci est à l'avant, mais soit largement ouvert lorsque le piston est à l'arrière.

L'orifice de raccordement au cylindre réalisait alors directement le siège de l'obturateur que formait la surface latérale du piston.

Pour son guidage, comme évoqué plus haut, mais aussi pour former l'obturateur de ce siège, le piston devait toujours avoir une longueur supérieure au diamètre de cet orifice de décharge ce qui conduisait également à un piston et à un cylindre qui étaient longs et donc lourds d'où pour le piston une certaine inertie et une commande demandant un parcours important mais aussi, tant pour le piston que pour le cylindre un coût matière et un encombrement qui étaient élevés.

Pour, compte tenu de ce poids, limiter les dégâts dus aux chocs du piston en fin de course, au moins l'une de ses extrémités est garnie d'une butée en matière relativement souple qui, malheureusement, se détériore rapidement et interdit généralement tout usage dans des installations travaillant à des hautes températures qui, par conduction, chaufferaient la valve au point d'en détériorer la butée, comme c'est par exemple le cas en cimenterie.

Un résultat que l'invention vise à obtenir est un piston de valve de décharge brutale qui, tout en évitant les pertes de charge et tout coincement du piston, ne présente qu'une longueur très faible et donc un poids, une inertie et un encombrement réduits. A cet effet, elle a pour objet un piston du type précité notamment caractérisé en ce qu'il se présente sous la forme d'une plaque pourvue, sur le même côté, d'une part, d'une courte collerette périphérique dont la face externe n'assure qu'un relatif guidage en s'engageant dans le cylindre avec un jeu suffisamment important pour réserver au gaz amené par l'orifice d'alimentation un passage suffisant pour lui permettre de gagner la capacité et, d'autre part, d'une collerette médiane dont le bord réalise une portée de forme complémentaire à celle du siège avec lequel elle coopère pour fermer le parcours de décharge, et en ce que, afin d'obtenir un auto-centrage, le siège et la portée de la collerette médiane sont coniques. Elle a également pour objet la valve de décharge brutale pourvue d'un tel piston.

L'invention sera bien comprise à l'aide de la description ci-après faite, à titre d'exemple non limitatif, en regard du dessin ci-annexé qui représente schématiquement :

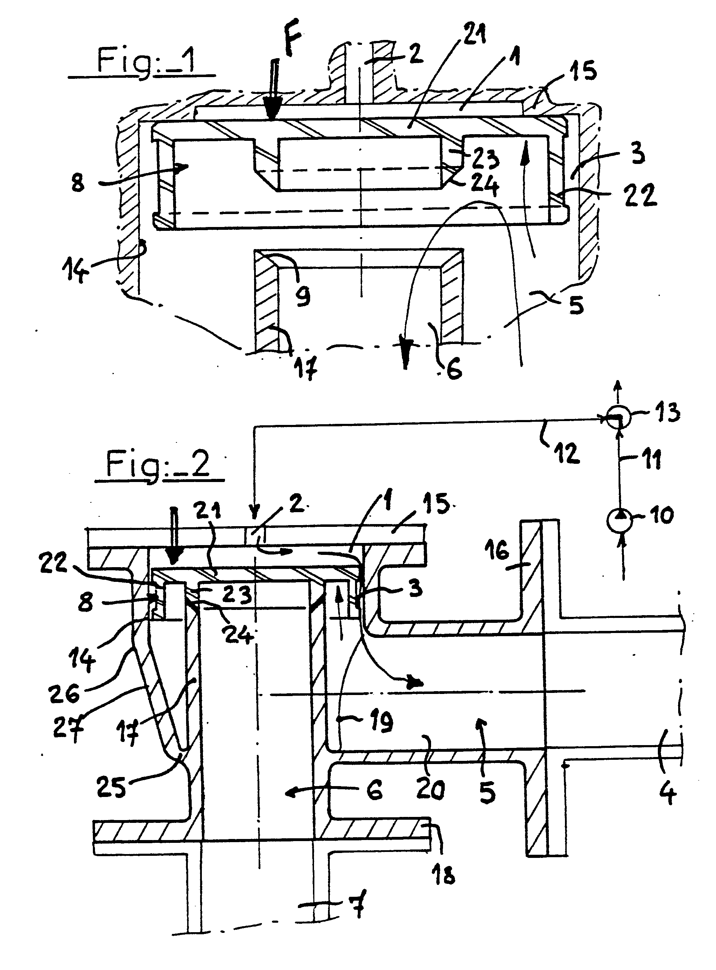

— figure 1 : le piston vue en coupe avec en trait fin une représentation partielle de la chambre d'alimentation et du siège prévu sur le parcours de décharge,

— figure 2 : une valve pourvue d'un tel piston.

En se reportant au dessin, on voit que la valve comprend :

— une chambre d'alimentation 1 pourvue d'un orifice de remplissage 2 et d'un passage 3 vers une capacité 4 et,

— en deux tronçons 5, 6, un parcours de décharge vers l'installation 7 à laquelle la valve s'applique.

Dans la chambre d'alimentation 1 est logé un piston libre 8 subissant, dans le sens de la flèche F une poussée due à l'action de la pression du gaz introduit dans la chambre 1 en vue du remplissage de la capacité 4.

Pour contrôler la circulation du gaz dans le parcours de décharge 5, 6, celui-ci passe par un siège 9 coopérant avec un obturateur directement réalisé par le piston 8.

Le premier tronçon 5 du parcours de décharge s'étend de la capacité 4 au siège 9, alors que le deuxième tronçon 6 de ce parcours de décharge s'étend du siège 9 à l'installation 7 et forme la tubulure de décharge proprement dite.

La mise en place de l'obturateur est assurée automatiquement par la susdite pression poussant le piston 8.

Dès que dans la chambre 1, la pression d'alimentation est relâchée, la pression du gaz présent dans la capacité 4 agit également mais dans le sens opposé à la flèche F, sur le piston 8 qu'elle fait revenir d'un coup sec.

Ce piston 8 ouvre alors violemment le siège 9 de la tubulure de décharge 6.

Dans le but de relâcher ladite pression d'alimentation, l'orifice de remplissage 2 est relié à une source 10 du gaz sous pression, grâce à une conduite en deux tronçons 11, 12 passant par une vanne à trois voies 13 permettant de fermer ou de raccorder cet orifice 2 et ce aussi bien à la source 10 qu'à l'air libre.

La chambre d'alimentation 1 est formée par un logement délimité par le piston 8 à l'extrémité d'un cylindre 14 qui, à cette extrémité est, à cet effet, pourvu d'un fond 15 traversé par l'orifice de remplissage 2.

Ce cylindre porte par ailleurs, d'une part, une bride 16 de raccordement avec la capacité 4 de l'un (5) des tronçons 5, 6 du parcours de décharge et, d'autre part, un élément tubulaire 17 limitant le déplacement du piston 8 vers l'avant alors que son entrée réalise le siège 9 de l'obturateur 8.

Cet élément tubulaire 17 abrite l'autre tronçon 6 du parcours de décharge et, à cet effet, porte à son extrémité externe une bride 18 de raccordement à l'installation 7.

Cet élément tubulaire 17 pénètre dans le cylindre 14 d'une part, en réservant entre lui et le cylindre un conduit annulaire de section égale à la section interne de l'élément tubulaire et donc à la section du tronçon 6 du parcours de décharge qu'il abrite et, d'autre part, sur une profondeur telle que, après recul du piston, entre l'obturateur 8 et le siège 9 subsiste à la périphérie du siège, un passage en forme de surface latérale du cylindre et ce par exemple au moyen d'une conduite 20 perpendiculaire à l'axe du cylindre 14.

Selon une caractéristique de l'invention, cette conduite est raccordée entre les petite 25 et grande 26 bases d'une partie tronconique 27 par laquelle le cylindre est raccordé sur la périphérie de l'élément tubulaire 17, laquelle conicité est telle qu'elle assure la constance de la section de passage entre la conduite 20 et le passage annulaire réservé entre l'élément tubulaire 17 et le cylindre 14.

Selon une caractéristique de l'invention, le piston 8 se présente sous la forme d'une plaque 21 pourvue sur le même côté :

— d'une part, d'une courte collerette périphérique 22 dont la face externe n'assure qu'un relatif guidage en s'engageant dans le cylindre avec un jeu suffisamment important pour réserver au gaz amené par l'orifice d'alimentation un passage 3 suffisant pour lui permettre de gagner la capacité 4 et,

— d'autre part, d'une collerette médiane 23 dont le bord réalise une portée 24 de forme complémentaire à celle du siège 9 avec lequel elle coopère pour fermer le parcours de décharge ; pour assurer leur auto-centrage, le siège 9 et la portée 24 de la collerette médiane sont coniques.

La collerette périphérique 22 est suffisamment fine et courte pour, en position de décharge, ne pas embréver la section de passage.

Ainsi réalisé le piston permet d'assurer une étanchéité métal sur métal autorisant l'emploi de la valve dans des installations travaillant à haute température et/ou en atmosphère agressive. Toute la partie de la surface du piston située à la périphérie de l'élément tubulaire a évidemment une surface amplement suffisante à assurer instantanément le retour du piston contre le fond du cylindre dès que la pression d'alimentation disparaît.

L'effet du chicane produit par une collerette périphérique évite quant à lui toute fuite du courant du décharge par remontée vers la chambre d'alimentation dont de plus l'orifice d'entrée 2 est relativement fermé par l'application du piston sur le fond du cylindre.

Grâce à ces simples courtes collerettes, le piston est très léger et peu encombrant et, pour sa commande, ne nécessite que de faibles déplacements.

## Revendications

1. Piston (8) de valve d'alimentation en gaz d'une capacité (4) puis de décharge brutale de cette capacité vers une installation (7), laquelle valve comprend un cylindre (14) à l'arrière duquel le piston délimite une chambre d'alimentation (1) pourvue d'un orifice (2) de remplissage et d'un passage (3) vers la capacité (4) et à l'avant duquel cylindre, sont raccordés les deux tronçons (5, 6) du parcours de décharge dans l'installation (7) du gaz venant de la capacité (4) en passant par un siège (9) coopérant avec une portée (24) du piston (8) qui réalise quant à lui un obturateur dont la mise en place est assurée par la pression du gaz introduit dans la chambre d'alimentation, qui agit sur la face arrière du piston en contrariant l'action de la pression du gaz présent dans la capacité, agissant quant à elle sur la partie de la face avant du piston qui n'est pas recouverte par le siège (9) pour, dès la chute de la pression dans la chambre d'alimentation, repousser brutalement le piston vers l'arrière pour fermer l'orifice de remplissage et vider, dans l'installation, le gaz emmagasiné dans la capacité, lequel piston (8) est caractérisé :

en ce qu'il se présente sous la forme d'une plaque (21) pourvue sur le même côté :

— d'une part, d'une courte collerette périphérique (22) dont la face externe n'assure qu'un relatif guidage en s'engageant dans le cylindre avec un jeu suffisamment important pour réserver au gaz amené par l'orifice d'alimentation un passage (3) suffisant pour lui permettre de gagner la capacité (4) et,

— d'autre part, d'une collerette médiane (23) dont le bord (24) réalise une portée de forme complémentaire à celle du siège (9) avec lequel elle coopère pour fermer le parcours de décharge,

en ce que, afin d'obtenir un auto-centrage, le siège (9) et la portée (24) de la collerette médiane sont coniques.

2. Valve d'alimentation en gaz d'une capacité (4) puis de décharge brutale de cette capacité (4) vers une installation (7) et notamment une telle valve comprenant un cylindre (14) à l'arrière duquel le piston délimite une chambre d'alimentation (1) pourvue d'un orifice (2) de remplissage et d'un passage (3) vers la capacité (4) et à l'avant duquel cylindre sont raccordés les deux tronçons (5, 6) du parcours de décharge dans l'installation (7) du gaz venant de la capacité (4) en passant par un siège (9) coopérant avec une portée (24) du piston (8) qui réalise ainsi un obturateur dont la mise en place est assurée par la pression du gaz introduit dans la chambre d'alimentation qui agit sur la face arrière du piston en contrariant l'action de la pression du gaz présent dans la capacité, agissant quant à elle sur la partie de la face avant du piston qui n'est pas recouverte par le siège pour, dès la chute de la pression dans la chambre d'alimentation, repousser brutalement le piston vers l'arrière pour fermer l'orifice de remplissage et vider, dans l'installation, le gaz emmagasiné dans la capacité, cette valve étant caractérisée en ce qu'elle comprend un piston selon la revendication 1.

3. Valve selon la revendication 2 au cylindre de laquelle sont raccordés les deux tronçons (5, 6) du parcours de décharge qui sont reliés l'un avec la capacité (4) et l'autre à l'installation (7), ce dernier consistant en un élément tubulaire (17) pénétrant dans le cylindre pour y limiter le déplacement du piston (8) vers l'avant et pour que son entrée réalise le siège (9) de l'obturateur (8), dans laquelle valve :

— ledit élément tubulaire (17) pénètre dans le cylindre (14), d'une part en réservant entre lui et le cylindre un conduit annulaire de section égale à la section interne de l'élément tubulaire et donc à la section du tronçon (6) de parcours qu'il abrite et, d'autre part, sur une profondeur telle que, après recul du piston, entre l'obturateur (8) et le siège (9) subsiste à la périphérie du siège un passage en forme de surface latérale de cylindre dont l'étendue est égale à celle de la section interne de l'élément tubulaire (17) et donc à la section du tronçon (6) de parcours de décharge qu'il abrite,

— l'autre tronçon (5) du parcours de décharge se raccorde vers l'avant du cylindre par un orifice (19) de même section que la section interne de l'élément tubulaire (17), cette valve étant caractérisée en ce que la conduite est raccordée entre les petite et grande bases d'une partie tronconique par laquelle le cylindre et raccordé à l'élément tubulaire (17) et en ce que cette partie tronconique a une conicité telle qu'elle assure la constance de la section de passage entre la conduite (20) et le passage annulaire réservé entre l'élément tubulaire (17) et le cylindre (14).

## Claims

1. A piston (8) of a valve for supplying a capacity (4) with gas and then abruptly discharging the capacity to an installation (7), the valve comprising a cylinder (14) at the rear of which the piston bounds a supply chamber (1) formed with a filling orifice (2) and with a passage (3) to the capacity (4), there being connected to the front of the cylinder (14) the two parts (5, 6) of a discharge path for the gas from the capacity (4) to the installation (7), the path extending by way of a seat (9) cooperating with a bearing surface (24) of the piston (8), the same being operative as a lid positioned by the pressure of the gas introduced into the supply chamber, such pressure acting on the rear face of the piston against the action of the gas pressure in the capacity, the latter pressure acting on that part of the front surface of the piston which is not covered by the seat (9), so that in response to a pressure drop in the supply chamber the piston is thrust abruptly to the rear to close the filling orifice and empty the gas stored in the capacity into the installation (7), the piston (8) being characterised in that :

It is in the form of a plate (21) having on the same side :

— A short peripheral collar (22) whose outside surface provides only a relative guidance by engaging in the cylinder with sufficient clearance to reserve for the gas coming through the supply orifice a passage (3) large enough for it to reach the capacity (4), and

— A small central collar (23) whose edge (24) forms a bearing surface of companion shape to that of the seat (9), with which it co-operates to close the discharge path ; and in that

To provide self-centring the seat (9) and the bearing surface (24) of the central collar (23) are conical.

2. A valve for supplying a capacity (4) with gas, then abruptly discharging the capacity (4) to an installation (7), notably a valve of this kind comprising a cylinder (14) at the rear of which the piston bounds a supply chamber (1) formed with a filling orifice (2) and with a passage (3) to the capacity (4), there being connected to the front of the cylinder (14) the two parts (5, 6) of a discharge path for the gas from the capacity (4) to the installation (7), the path extending by way of a seat (9) co-operating with a bearing surface (24) of the piston (8), the same being operative as a lid positioned by the pressure of the gas introduced into the supply chamber, such pressure acting on the rear face of the piston against the action of the gas pressure in the capacity, the latter pressure acting on that part of the front surface of the piston which is not covered by the seat (9), so that in response to a pressure drop in the supply chamber the piston is thrust abruptly to the rear to close the filling orifice and empty the gas stored in the capacity into the installation (7), the valve being characterised in that it comprises a piston according to claim 1.

3. A valve according to claim 2 to whose cylinder the two parts (5, 6) connected one to the capacity (4) and the other to the installation (7) are connected, the latter consisting of a tubular element (17) extending into the cylinder to limit forwards movement of the piston (8) therein and so that its inlet forms the seat (9) of the lid (8) in which valve :

— The tubular element (17) extends into the cylinder (14) and leaves between itself and the cylinder an annular duct of a cross-section equal to the inner cross-section of the tubular element and therefore to the cross-section of the part (6) which it protects, the tubular element (17) also extending into the cylinder to a depth such that after the return of the piston there remains between the lid (8) and the seat (9) at the periphery thereof a passage in the form of a lateral cylindrical surface whose extent is equal to that of the internal cross-section of the tubular element (17) and therefore to the cross-section of that part (6) of the discharge path which it protects, and

— The other part (5) of the discharge path is connected towards the front of the cylinder by an orifice (19) of the same cross-section as the internal cross-section of the tubular element (17), the valve being characterised in that the duct is connected between the minor base and major base of a frustum-shaped part by which the cylinder is connected to the tubular element (17) and the frustum-shaped part has a conicity such as to maintain the flow cross-section constant between the duct (20) and the annular passage left between the tubular element (17) and the cylinder (14).

**Patentansprüche**

1. Kolben (8) eines Ventiles zur Zuführung von Gas eines bestimmten Raums (4) und zur schnellen Entladung dieses Raums in Richtung auf eine Installation (7), wobei das Ventil einen Zylinder (14) aufweist, an dessen Rückseite der Kolben eine Zuführungskammer (1) begrenzt, die mit einer Füllöffnung (2) und mit einem Durchgang (3) zum Raum (4) versehen sind, und wobei an der Vorderseite des Zylinders die beiden Teilstücke (5, 6) der Entladestrecke in der Installation (7) für das Gas verbunden sind, das von dem Raum (4) kommt und über einen mit einer Öffnung (24) des Kolbens (8) zusammenwirkenden Sitz (9) hindurchgeht, der seinerseits einen Verschluß bildet, dessen Instellungbringen durch den Druck des in die Zuführkammer eingeführten Gases sichergestellt ist, die auf die rückseitige Stirnfläche des Kolbens wirkt und dabei die Wirkung des in dem Raum vorhandenen Gases hindert, welches seinerseits auf die vordere Stirnseite des Kolbens, die nicht durch den Sitz (9) abgedeckt ist, wirkt, um vom Abfall des Druckes in der Zuführungskammer an schnell den Kolben nach hinten zu schieben, so daß die Zuführungsöffnung geschlossen und in der Installation das in dem Raum gespeicherte Gas geräumt wird, wobei der Kolben (8) dadurch gekennzeichnet ist :

daß er die Form einer Platte (21) aufweist, die auf der selben Seite vorgesehen ist :

— einerseits mit einem kurzen umfangsseitigen Bund (22), dessen äußere Seite nur eine Relativführung beim Angriff an dem Zylinder mit einem ausreichenden Spiel sicherstellt, was wichtig ist, um dem durch die Zuführungsöffnung zugeleiteten Gas einen Durchgang (3) bereitzustellen, der es ihm erlaubt, den Raum (4) zu erreichen, und

— andererseits mit einem mittleren Bund (23), dessen Rand (24) eine Öffnung mit komplementärer Form zu jener des Sitzes (9) bildet, mit dem er zum Schließen der Entladestrecke zusammenwirkt,

und daß der Sitz (9) und die Öffnung (24) des mittleren Bundes zum Erhalt einer selbsttätigen Zentrierung konisch ausgebildet sind.

2. Ventil zum Zuführen von Gas eines bestimmten Raumes (4) und zur nachfolgenden schnellen Entladung dieses Raumes (4) gegen eine Installation (7) und insbesondere ein solches Ventil, das einen Zylinder (14) aufweist, an dessen Rückseite der Kolben eine Zuführungskammer (1) begrenzt, die mit einer Öffnung (2) zum Füllen und einem Durchgang (3) zu dem Raum (4) versehen ist, und an die Vorderseite des Zylinders zwei Teilstücke (5, 6) einer Entladestrecke in der Installation (7) für das von dem Raum (4) kommende und durch einen mit einer Öffnung (24) des Kolbes (8) zusammenwirkenden Sitz (9) hindurchströmende Gas angeschlossen sind, der auf diese Weise einen Verschluß bildet, dessen Instellungbringen durch den Druck des in die Zuführungskammer eingeführten Gases sichergestellt ist, der auf die rückseitige Stirnfläche des Kolbens unter Verhinderung des Wirkung des Drucks des in dem Raum befindlichen Gases wirkt, welches, was es betrifft, auf den Teil der vorderen Stirnseite des Kolbens wirkt, der nicht durch den Sitz abgedeckt ist, um vom Druckabfall in der Zuführungskammer schnell den Kolben nach hinten schiebt, um die Zuführungsöffnung zu schließen und in der Installation das in dem Raum gespeicherte Gas zu räumen, dadurch gekennzeichnet, daß es einen Kolben gemäß Anspruch 1 aufweist.

3. Ventil nach Anspruch 2, an dessen Zylinder zwei Teilstücke (5, 6) einer Entladestrecke angeschlossen sind, von denen die eine mit dem Raum (4) und die andere mit der Installation (7) verbunden ist, wobei letztere aus einem rohrförmigen Element (17) besteht, das in den Zylinder vorsteht, um dort den Hub des Kolbens (8) nach vorne zu begrenzen, und dessen Eingang den Sitz (9) des Verschlusses (8) bildet, wobei in dem Ventil :

— das rohrförmige Element (7) in den Zylinder (14) eingeführt ist, einerseits zwischen sich und dem Zylinder eine ringförmige Führung mit einem Querschnitt gleich dem inneren Querschnitt des rohrförmigen Elementes und demzufolge in dem Bereich des Teilstückes (6) der Strecke zu belassen, den es beherbergt, und andererseits auf eine Tiefe, wie sie nach dem Rücklauf des Kolbens zwischen dem Verschluß (8) und dem Sitz (9) an dessen Umfang als Durchgang in Form einer seitwärts befindlichen Oberfläche des Zylinders besteht, dessen Weite gleich dem inneren Querschnitt des rohrförmigen Elements (17) und also dem Querschnitt des Teilstücks (6) der Entladestrecke ist, den es beherbergt,

— und das andere Teilstück (5) der Entladestrecke gegen den vorderen Teil des Zylinders durch eine Öffnung (19) mit gleichem Querschnitt verbunden ist, wie der innere Querschnitt des rohrförmigen Elements (17), dadurch gekennzeichnet, daß der Durchlaß des Ventils zwischen den kleinen und dem großen Sockel mittels eines kegelstumpfförmigen Teils verbunden ist, durch den der Zylinder mit dem rohrförmigen Element (17) verbunden ist, und daß dieser kegelstumpfförmige Teil eine Konizität aufweist, die die Konstanz zwischen dem Querschnitt des Durchgangs zwischen des Führung (20) und dem ringförmigen Durchlaß sicherstellt, die zwischen dem rohrförmigen Element (17) und dem Zylinder (14) belassen ist.

0 134 726

Fig. 1

Fig. 2